# EUROPÄISCHE PATENTSCHRIFT

(11) **EP 0 285 046 B1**
(45) Veröffentlichungstag und Bekanntmachung des Hinweises auf die Patenterteilung: **22.09.1993**
(21) Anmeldenummer: 88104919.1
(22) Anmeldetag: 26.03.1988
(51) Int. Cl.: A47K 3/02, B29D 22/00, B29C 39/02, B29C 67/22

(54) **Muldenförmiger Kunststoff-Sanitärgegenstand, insbesondere Badewanne**
Sanitary plastic trough-shaped article, in particular a bath tub
Elément sanitaire en matière plastique en forme de baquet, en particulier baignoire

(30) Priorität: 02.04.1987 DE 3711124; 16.04.1987 DE 3712959
(43) Veröffentlichungstag der Anmeldung: 05.10.1988
(73) Patentinhaber: Schock & Co. GmbH, D-73614 Schorndorf (DE)
(72) Erfinder: Schock, Karl, D-7060 Schorndorf (DE)
(74) Vertreter: Hoeger, Stellrecht & Partner

(56) Entgegenhaltungen:
- EP-A- 0 019 867
- EP-A- 0 229 262
- DE-A- 1 604 575
- DE-A- 2 300 228
- DE-A- 2 616 309
- FR-A- 2 077 184
- FR-A- 2 307 637
- GB-A- 2 148 786
- GB-A- 2 171 008
- GB-A- 2 197 245
- US-A- 1 958 422
- US-A- 3 329 546
- US-A- 4 069 523
- US-A- 4 289 717
- Patent Abstracts of Japan, Band 7, Nr. 31 (M-192) (1176), 8. Februar 1983 & JP-A-57 187 231 (Matsushita Denki Sangyo K.K.) 17.11.1982
- Patent Abstracts of Japan, Band 9, Nr. 294 (M-431) (2017), 20. November 1985 & JPè-A-60 132 717 (Toshiba Chemical K.K.) 15.07.1985
- Japanese Patent Gazette, Sektion CH, Woche 8643, Klasse A, Nr. 86-280303 (43), Derwent Publications Ltd, London, GB; &JP-A-61 236 859 (Polyplastics Co. Ltd) 22.10.1986
- Japanese Patent Gazette, Sektion CH, Woche 8405, Klasse A, Nr. 84-030211 (05), Derwent Publications Ltd, London, GB; & JP-A-58 21 5414 (Battelle Dev. Corp.) 14.12.1983
- Japanese Patent Gazette, Sektion CH, Woche 8418, Klasse A, Nr. 84-111370 (18), Derwent Publications Ltd, London, GB; & JP-A-59 05 2622 (Mitsubishi Monsanto K.K.) 27.03.1984
- Japanese Patent Gazette, Sektion CH, Woche 8620, Klasse A, Nr. 86-127689 (20), Derwent Publications Ltd, London, GB; & JP-A-61 064 745 (Showa High Polymer K.K.) 03.04.1986
- Japanese Patent Gazette, Sektion CH, Woche 8319, Klasse A, Nr. 83-45882K (19), Derwent Publications Ltd, London, GB; & JP-A-58 057 462 (Nippon Oil Seal Ind.) 05.04.2983
- Japanese Patent Gazette, Sektion CH, Woche 8606, Klasse A, Nr. 86-039732 (06), Derwent Publications Ltd, London, GB; & JP-A-60 260 613 (Sanyo Chem. Ind. Ltd) 23.12.1985
- Japanese Patent Gazette, Sektion CH, Woche 8339, Klasse A, Nr. 83-774183 (39), Derwent Publications Ltd, London, GB; & JP-58 141 219 (YUKA BADISCHE K.K.) 22.08.1983
- Japanese Patent Gazette, Sektion CH, Woche 8644, Klasse A, Nr. 86-289251 (44), Derwent Publications Ltd, London GB; & JP-A-61 213 120 (Sekisui Plastics K.K.) 22.09.1986
- Patent Abstracts of Japan, Band 10, Nr. 122 (M-476) (2179), 7. Mai 1986; & JP-A-60 250 924 (Toyota Jidosha K.K.) 11.12.1985
- Patent Abstracts of Japan, Band 9, Nr. 198 (M-404) (1921), 15. August 1985 & JP-A-60 61 223 (Aron Kasei K.K. 09.04.1985)
- Patent Abstracts of Japan, Band 6, Nr. 228 (M-171) (1106), 13. November 1983 & JP-A-57 129 729 (Bridgestone Tire K.K.) 11.08.1982

## Beschreibung

Die Erfindung betrifft einen muldenförmigen Kunststoff-Sanitärgegenstand, wie eine Bade- oder Duschwanne, ein Becken oder dergleichen, welcher eine die Gebrauchsseite bildende Kunststoff-Innenschicht mit einer Wandstärke von mindestens 1 mm und eine unmittelbar gegen deren Rückseite angegossene und mit dieser stoffschlüssig verbundene, der Verstärkung der Innenschicht dienende, als Reaktionsgußstück ausgebildete Kunststoff-Außenschicht aufweist, welche wesentlich dicker als die Innenschicht ist.

Sanitärgegenstände, wie Badewannen, Duschtassen oder -wannen, Waschbecken, aber auch Waschtische mit eingeformten Becken, werden in immer grösserem Umfang aus gegebenenfalls Füllstoffe und Verstärkungselemente enthaltenden Kunststoffen hergestellt, weil sich die Kunststoffe in unterschiedlichster Weise einfärben lassen, eine geringere Wärmeleitfähigkeit als z.B. emaillierte Stahlwannen aufweisen und sich eine Verschleißspuren zeigende Oberfläche in vielen Fällen durch Polieren wieder attraktiv machen lässt. So schildert z.B. eine Notiz in der Zeitschrift "Plastics and Rubber International", Ausgabe Oktober 1985, Band 10 Nr. 5, Seite 6, den Stand der Technik anhand von Badewannen; danach ist es letzter Stand, im Vakuum-Tiefziehverfahren aus einer Acrylharzplatte eine die Innenschicht im Sinne der obigen Definition bildende Innenschale herzustellen und diese dann in eine geschlossene Form einzubringen, in der auf der Rückseite der Innenschale im Reaktionsgußverfahren eine der Verstärkung der Innenschale dienende Aussenschicht aus Polyurethanschaum erzeugt wird. Dasselbe Vorgehen ergibt sich aus der GB-A-2 148 786. Diese Vorgehensweise bringt eine ganze Reihe von Nachteilen mit sich: Beim Tiefziehen der Acrylharzplatte zu einer muldenförmigen Innenschale lassen sich gravierende Wandstärkenunterschiede grundsätzlich nicht vermeiden, u.z. ergeben sich bei der Herstellung einer Badewanne die dünnsten Stellen der Innenschale an den vier "Innenecken" am Wannenboden, wobei die Wandstärke der Innenschale bereichsweise so gering sein kann, dass dort die andersfarbige Polyurethanschaum-Aussenschicht durchschimmert; auch lässt sich die nicht besonders formstabile Innenschale beim Einbringen in die Form zur Herstellung der Aussenschicht ziemlich schlecht handhaben; schließlich können nur diejenigen Innenschalen weiterverwendet werden, die maßhaltig genug sind, um Sich der Form für die Herstellung der Aussenschicht einwandfrei anzupassen, was erfahrungsgemäss zu einem erheblichen Ausschuß führt.

Ferner sind Kunststoff-Sanitärgegenstände, wie Badewannen und Waschbecken bzw. Waschtischplatten mit eingeformten Waschbecken, aus sogenanntem Cultured-Marble (Polymerbeton) bekannt, bei deren Herstellung wie folgt vorgegangen wird: Auf eine entsprechend der Gebrauchsseite des Sanitärgegenstands gestaltete konvexe Form wird zunächst eine Gelcoat-Schicht aufgespritzt, die später die Innenschicht des Sanitärgegenstands bildet, wobei ohne eine rückseitige Form gearbeitet wird. Dann bringt man in eine entsprechend der Rückseite des Sanitärgegenstands gestaltete konkave Form eine Kunststoffmasse ein, mit der die Rückseite der Gelcoat-Schicht beschichtet werden soll; bei dieser Kunststoffmasse handelt es sich im allgemeinen um mit Füllstoffen vermischtes Polyesterharz. Nach dem Eintauchen der die Gelcoatschicht tragenden konvexen Form in die konkave Form und dem Zusammenfahren der beiden Formen werden diese gerüttelt und die die Aussenschicht bildende Kunststoffmasse gehärtet. Wie bei Gelcoat-Schichten üblich, beträgt die Wandstärke der Innenschicht weniger als 1 mm, sie ist auch kaum mit gleichmässiger Dicke herzustellen und führt deshalb zu demselben Nachteil wie eine tiefgezogene Innenschale, ganz abgesehen davon, dass wegen der geringen Wandstärke dem Beseitigen von Oberflächenbeschädigungen an der Gebrauchsseite des Sanitärgegenstands durch Polieren enge Grenzen gesetzt sind.

Der Erfindung lag nun die Aufgabe zugrunde, einen billig herstellbaren Sanitärgegenstand der eingangs erwähnten Art vorzuschlagen, dessen Ober- bzw. Gebrauchsseite gute Gebrauchseigenschaften besitzt und durch den späteren Benutzer gut nachbearbeitet werden kann, so dass sich Kratzer und dergleichen wieder herauspolieren lassen.

Diese Aufgabe lässt sich erfindungsgemäss dadurch lösen, dass auch die Innenschicht als Reaktionsgußstück ausgebildet ist.

Vorzugsweise beträgt die Wandstärke der Innenschicht ca. 2 bis 3 mm und diejenige der Aussenschicht 8 bis 10 mm. Zwar könnte es sich bei der Innenschicht auch um eine tiefgezogene Schale handeln, eine Wandstärke von mindestens 1 mm aber die problemlose Herstellung der Innenschicht als Gußteil, so dass sich für die Innenschicht ein nicht-thermoplastischer Kunststoff wie vernetztes Acrylharz oder ungesättigter Polyester, verwenden lässt, der chemisch viel beständiger ist als die tiefziehbaren Kunststoffe, die bis zu einem gewissen Grad thermoplastische Eigenschaften besitzen müssen. Ausserdem sind als Reaktionsgußteile hergestellte Innenschalen maßhaltiger als tiefgezogene Schalen, so dass sich der Ausschuß vermindern lässt.

Die Aussenschicht kann aus Schaumkunststoff bestehen, d.h. man kann die Innenschale rückseitig z.B. mit geschäumtem Polyurethanharz umgiessen; bessere mechanische Eigenschaften erzielt man aber mit einer Ausführungsform, bei der mindestens die Hälfte des Volumens der Aussenschicht aus Hohlräume enthaltenden Füllkörpern mit einem Durchmesser von wenigstens 500 µm besteht. Der hohe Volumenanteil der Füllkörper am Material der Aussenschicht erlaubt die Herstellung eines Sanitärgegenstands, dessen Aussenschicht beim Aushärten wenig schrumpft und zu einer hohen Auszugfestigkeit von Schrauben oder anderen Befestigungselementen führt, so dass Teile, wie Befestigungselemente, Haltegriffe, Whirlpool -Düsen etc. zuverlässig haltend angebracht werden können. Infolge der Hohlräume der Füllkörper oder des Schaumkunststoffs bringt die Aussenschicht ein geringes Gewicht sowie ein hohes Wärmeisoliervermögen mit sich, so dass z.B. die Wand einer Badewanne nicht als kalt empfunden wird; ausserdem sind die für die Aussenschicht aufzuwendenden Materialkosten viel geringer als z.B. bei einer Aussenschicht aus Glasfaser-verstärktem Polyester. Die auf die Art der Aussenschicht zurückzuführenden Vorteile lassen sich aber mit vertretbarem Kostenaufwand für die Herstellung nur dann erzielen, wenn die Aussenschicht im Reaktionsguß gegossen wird, d.h. als Reaktionsgußstück ausgebildet ist, was auch die Verwendung eines chemisch ausserordentlich beständigen Kunststoffs wie PMMA oder Polyester erlaubt.

Da PMMA farbbeständiger ist als Polyester und zu einem ausserordentlich ansprechenden Äußeren der erfindungsgemässen Sanitärgegenstände führt, handelt es sich bei dem Kunststoff der Innenschicht für eine bevorzugte Ausführungsform um quervernetztes Polymethylmetacrylat, welches gegen chemische Einflüsse hinreichend beständig ist.

Die Innenschicht kann aus reinem Harz bestehen, aus Kostengründen kann es sich aber empfehlen, eine Ausführungsform zu wählen, bei der die Innenschicht Füllkörper mit einem Durchmesser von höchstens 100µm enthält. Um die Möglichkeit des Nachpolierens der Gebrauchsseite der Innenschicht zu gewährleisten, müssen die Füllkörper der Innenschicht dann aus einem ein Polieren der letzteren zulassenden Material bestehen, insbesondere aus Aluminium-und/oder Magnesium-Hydroxid.

Es wurde bereits darauf hingewiesen, dass es sich besonders empfiehlt, als Kunststoffe für die Innen- und die Aussenschicht Giessharze zu verwenden, die nach dem Polymerisieren voll vernetzt und deshalb gegen chemische Einflüsse ausserordentlich widerstandsfähig sind. Nun könnten für die Innen- und die Aussenschicht unterschiedliche Giessharze verwendet werden, aus Gründen eines besonders guten und festen Verbunds zwischen Innen- und Aussenschicht empfehlen sich jedoch Ausführungsformen. bei denen der Kunststoff der beiden Schichten derselbe ist, wobei voll vernetztes PMMA bevorzugt wird, jedoch auch andere Giessharze verwendet werden können, so z.B. Polyester.

Eine besonders vorteilhafte Ausführungsform der Erfindung zeichnet sich dadurch aus, dass die Füllkörper der Aussenschicht zumindest überwiegend Hohlkörper sind, weil dadurch nicht nur das Wärmeisoliervermögen besonders stark verbessert, sondern auch das Gewicht des Sanitärgegenstands ganz erheblich herabgesetzt wird. In diesem Fall führt die Erfindung also zu einem besonders billigen, leichten und dennoch sehr widerstandsfähigen Produkt. Bevorzugt werden geschlossene Hohlkörper, vor allem Mikroglaskügelchen, die sich aus Altglas kostengünstig herstellen oder aus Kraftwerksrauchgasen absondern lassen und deshalb einen besonders billigen Füllstoff darstellen.

Die Erfindung betrifft ausserdem ein Verfahren zur Herstellung eines erfindungsgemäßen Sanitärgegenstands, und diesbezüglich lag der Erfindung die Aufgabe zugrunde, die Herstellung zu vereinfachen und zu verbilligen. Ausgehend von dem vorstehend an zweiter Stelle erörterten bekannten Verfahren, d.h. von einem Verfahren, bei dem zunächst auf einer entsprechend der Gebrauchsseite des Sanitärgegenstands gestalteten konvexen Form mit fließfähigem Kunststoffmaterial eine Kunststoff-Innenschicht hergestellt und dann auf deren Aussenseite mittels einer entsprechend der Rückseite des Sanitärgegenstands gestalteten konkaven Form mit fließfähigem Kunststoffmaterial eine an der Innenschicht fest haftende Kunststoff-Aussenschicht erzeugt wird, lässt sich diese Aufgabe erfindungsgemäss dadurch lösen, dass die Innenschicht zwischen der konvexen Form und einer der Gestalt der Innenschicht entsprechenden ersten konkaven Form erzeugt wird, worauf die erste konkave Form entfernt und die Innenschicht samt der konvexen Form in eine entsprechend der Rückseite des Sanitärgegenstands gestaltete zweite konkave Form eingetaucht und zwischen letzterer und der Innenschicht die Aussenschicht erzeugt wird. Für die Durchführung des erfindungsgemässen Verfahrens benötigt man also nur drei Formen bzw. Formhälften, nämlich die eine konvexe Form und die beiden konkaven Formen, und die Innenschicht braucht nicht als solche gehandhabt zu werden, sondern sie verbleibt auf der konvexen Form und wird mit dieser in die zweite konkave Form eingefahren.

Damit beim Einfüllen des fließfähigen Kunststoffmaterials in den von der konvexen und der ersten konkaven Form bzw. von der Innenschicht und der zweiten konkaven Form gebildeten Formhohlraum aus letzterem die Luft entweichen kann, wird empfohlen, die konvexe Form und die jeweilige konkave Form während des Ausfüllens des von diesen beiden Formen gebildeten Formhohlraums mit Kunststoffmaterial so anzuordnen, daß nur eine Stelle der von der konkaven Form gebildeten Formhohlraumwand eine von tieferliegenden Stellen dieser Formhohlraumwand umschlossene Zone bildet, und dann den Formhohlraum über einen an dieser Zone in den Formhohlraum mündenden Kanal zu entlüften; hingegen sollten die Formen zum Aushärten des Kunststoffmaterials so angeordnet werden, daß der Muldenboden des Sanitärgegenstands nach oben weist, damit nämlich während der Dauer des Aushärtens im Kunststoffmaterial eventuell vorhandene Luftbläschen sich nicht an der Gebrauchsseite des Sanitärgegenstands bzw. an der Grenzfläche zwischen Innen- und Aussenschicht ansammeln können - im ersten Fall würde das Aussehen des Sanitärgegenstands stark beeinträchtigt oder dieser gar unbrauchbar gemacht werden, im zweiten Fall würden die Luftbläschen den Verbund zwischen Innen- und Aussenschicht beeinträchtigen oder sogar durch die relativ dünne Innenschicht sichtbar sein.

Da beim Aushärten des Kunststoffmaterials ein gewisses Schrumpfen unvermeidlich ist, wird empfohlen, die beiden einen Formhohlraum bildenden Formen während des Aushärtens des Kunststoffmaterials dessen Schrumpfung entsprechend einander zu nähern, um zu vermeiden, dass das Kunststoffmaterial von einer oder beiden Formen wegschrumpft und deshalb eine nicht mehr formengetreue Oberfläche erhält. Dies kann mit einem entsprechenden Getriebe einer Formschliessvorrichtung erreicht werden, einfacher und billiger ist es aber, elastische Formschliesselemente vorzusehen, die die eine Form in Richtung auf die andere vorspannen.

Bei der Herstellung der Aussenschicht kann der hohe Füllkörperanteil zu Problemen bei der Fließfähigkeit des Kunststoffmaterials führen, weshalb empfohlen wird, dem Kunststoffmaterial für die Aussenschicht vor dem Eingeben zwischen die Formen ein oder mehrere geeignete Silane beizumischen, wie sie im Stand der Technik für die Verbesserung des Fließverhaltens von Kunststoffmassen bekannt sind.

Besonders vorteilhaft ist es, wenn als Kunststoffmaterial für die Aussenschicht dasjenige Kunststoffmaterial verwendet wird, welches die Firma Schock & Co. GmbH unter dem geschützten Warenzeichen THERMASSIV auf den Markt gebracht hat, da dieser Werkstoff besonders billig, leicht, widerstandsfähig und wärmedämmend ist.

Schliesslich befasst sich die Erfindung auch noch mit einer Einrichtung zur Durchführung des erfindungsgemässen Herstellungsverfahrens, wobei von einer Einrichtung ausgegangen wird, welche eine der Gebrauchsseite des Sanitärgegenstands entsprechend gestaltete konvexe Form sowie eine entsprechend der Rückseite des Sanitärgegenstands gestaltete konkave Form und eine Formschließvorrichtung aufweist. Die erfindungsgemässe Einrichtung zeichnet sich dadurch aus, dass eine erste und eine zweite konkave Form vorgesehen sind, deren erste entsprechend der Rückseite der Innenschicht und deren zweite entsprechend der Rückseite der Aussenschicht gestaltet ist, und dass durch die Formschließvorrichtung die konvexe Form sowohl in die erste konkave Form als auch zusammen mit der Innenschicht in die zweite konkave Form einfahrbar ist. Auch in diesem Zusammenhang sei wieder darauf hingewiesen, dass die erfindungsgemässe Einrichtung mit nur drei Formen bzw. Formhälften auskommt und dass die Innenschicht nicht als solche gehandhabt werden muss, sondern nur die konvexe Form, auf der die Innenschicht aufgrund des Schrumpfens des aushärtenden Kunststoffmaterials haften bleibt.

Um den jeweiligen Formhohlraum in optimaler Weise mit Kunststoffmaterial befüllen zu können und andererseits während des Aushärtens des Kunststoffmaterials ein Wandern von in letzterem enthaltenen Luftbläschen an die Gebrauchsseite des Sanitärgegenstands bzw. an die Grenzfläche zwischen Innen- und Aussenschicht zu verhindern, besitzt eine bevorzugte Ausführungsform der erfindungsgemässen Einrichtung eine Formschließvorrichtung mit einer Schwenkvorrichtung zum Drehen der konvexen Form gemeinsam mit mindestens der zweiten konkaven Form um eine horizontale Schwenkachse. Während nämlich bei der Herstellung der Innenschicht wegen des für diese verwendbaren, relativ dünnflüssigen Kunststoffmaterials der von der konvexen und der ersten konkaven Form gebildete Formhohlraum sich mit nach oben weisendem Muldenboden befüllen und über einen am Muldenboden mündenden Entlüftungskanal entlüften lässt, sollte bei der Herstellung der Aussenschicht aus einem einen hohen Füllkörperanteil enthaltenden Giessharz das zähviskose Kunststoffmaterial in die noch offene zweite konkave Form gegeben werden können, so dass es sich aus den oben geschilderten Gründen empfiehlt, anschliessend die konvexe und die zweite konkave Form gemeinsam zu schwenken, damit dann der Muldenboden nach oben weist.

Um nur die konvexe Form bewegen zu müssen, d.h. um mit möglichst wenigen Antrieben auszukommen, weist bei einer besonders vorteilhaften Ausführungsform die Formschließvorrichtung eine Haltevorrichtung zum lösbaren Verbinden der konvexen Form mit jeweils einer der beiden konkaven Formen auf, so daß man nur eine mit der konvexen Form verbundene Schwenkvorrichtung benötigt, ebenso wie es nur erforderlich ist, die konvexe Form zu verschieben, um sie in eine der konkaven Formen einzufahren, welch letztere dann mit Hilfe der Haltevorrichtung an der konvexen Form befestigt und gehalten wird.

Wie bereits erwähnt empfiehlt es sich, im Hinblick auf das Schrumpfen der Kunststoffmaterialien beim Aushärten den Formhohlraum dadurch zu verkleinern, daß die eine Form in Richtung auf die andere entsprechend der Schrumpfung nachgeführt wird. Dies lässt sich besonders einfach erreichen, wenn die Formschließvorrichtung einen Träger aufweist, an dem die konvexe Form in Formschließrichtung beweglich gehalten ist, und wenn zwischen Träger und konvexer Form eine Nachstellvorrichtung zum Verschieben der konvexen Form gegenüber dem Träger in Formschließrichtung vorgesehen wird. Bei der Nachstellvorrichtung könnte es sich, wie bereits erwähnt, um Getriebemittel handeln, einfacher ist es jedoch, eine oder mehrere Federn vorzusehen, die insbesondere die Form eines zwischen Träger und konvexer Form angeordneten, mit einem Fluid als Druckmittel beaufschlagbaren flexiblen Hohlkörpers haben kann.

Um die Wandstärke der Innen- bzw. der Aussenschicht vorgeben zu können, empfiehlt sich eine Ausführungsform, bei der die Haltevorrichtung Justiermittel zur Einstellung der Spaltbreite des Formhohlraums besitzt. Bei einer Ausführungsform mit einer Nachstellvorrichtung kann es sich auch empfehlen, die Haltevorrichtung mit einer einstellbaren Hubbegrenzungsvorrichtung zur Begrenzung der Vorschiebung der konkaven Form in Richtung eines sich vergrössernden Abstands vom Träger zu versehen.

Eine besonders platzsparende und einfach aufgebaute Ausführungsform der erfindungsgemässen Einrichtung zeichnet sich dadurch aus, dass die Formschließvorrichtung ein Hubgestell aufweist, an dem die konvexe Form geführt sowie mittels einer Hubvorrichtung verschiebbar ist, und dass sich im Hubgestell die eine der beiden konkaven Formen über und die andere unter der konvexen Form befindet.

Es wurde bereits erwähnt, dass für die Innenschicht Acrylharz bevorzugt wird, weil es eine ausgezeichnete Farbbeständigkeit aufweist und nicht spröde ist; vor allem wegen seiner Farbbeständigkeit wird man Acrylharz Polyester vorziehen, obwohl letzteres billiger und sowohl gegenüber chemischen Angriffen, als auch gegenüber hohen Temperaturen beständiger als Acrylharz ist. Wegen des sich ergebenden guten Verbundes zwischen Innen- und Aussenschicht empfiehlt sich die Verwendung desselben Harzes für die beiden Schichten, als Kunststoff für die Aussenschicht liesse sich aber z.B. auch Polyester und Polyurethan verwenden.

Weitere Merkmale, Vorteile und Einzelheiten der Erfindung ergeben sich aus der nachfolgenden Beschreibung einer bevorzugten Ausführungsform der Erfindung sowie einer in der beiliegenden Zeichnung dargestellten vorteilhaften Ausführungsform der erfindungsgemässen Einrichtung; in der Zeichnung zeigen:
- Fig. 1:: eine schaubildliche Darstellung der Einrichtung zur Herstellung erfindungsgemäss ausgebildeter Badewannen;

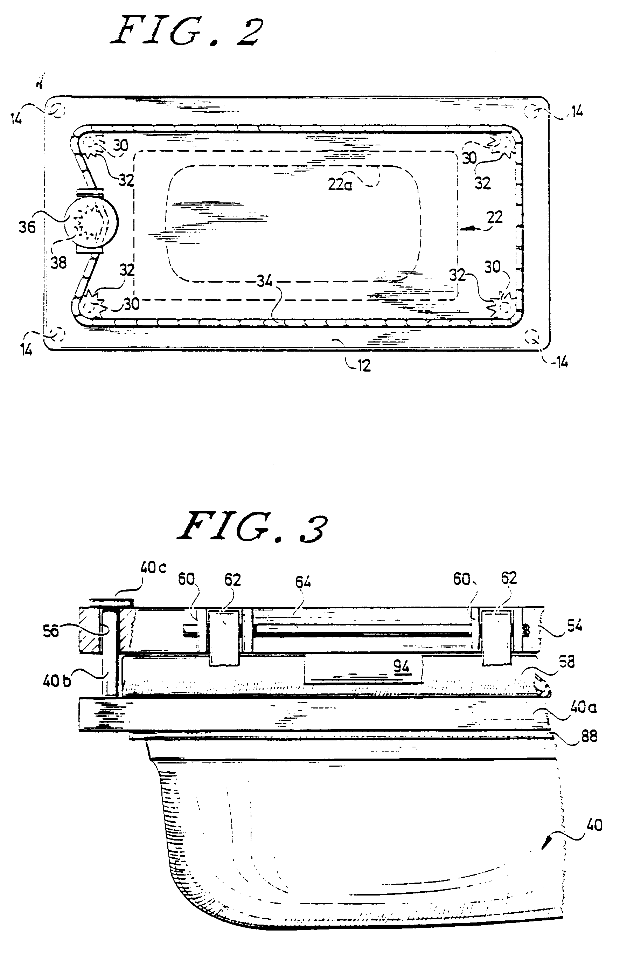

- Fig. 2:: eine Draufsicht auf diese Einrichtung;
- Fig. 3:: eine Seitenansicht der konvexen Form sowie ihres Trägers und
- Fig. 4A bis Fig. 4D :: die verschiedenen Schritte bei der Herstellung einer Badewanne, wobei die Formen im Längsschnitt dargestellt wurden.

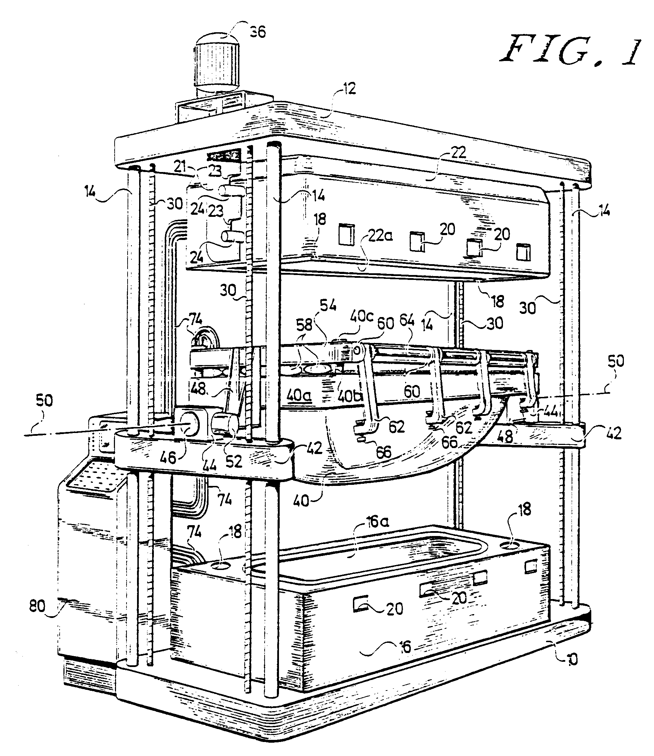

Die in Fig. 1 als Ganzes, jedoch stark vereinfacht gezeigte erfindungsgemässe Einrichtung besitzt eine Grundplatte 10 und eine Kopfplatte 12, die über Führungssäulen 14 fest miteinander verbunden sind und so ein Gestell der Einrichtung bilden. Auf der Grundplatte 10 steht eine untere konkave Form 16, die im Sinne der Ansprüche die zweite konkave Form darstellt und einen Formhohlraum 16a bildet, welcher entsprechend der Unter- oder Rückseite der herzustellenden Badewanne gestaltet ist. An ihrer Oberseite weist die Form 16 Passlöcher 18 auf, die von innen ballig ausgebildeten kurzen Büchsen gebildet werden sowie mit später noch zu erwähnenden Passstiften 68 zusammenwirken. An den einander gegenüberliegenden Längsseitenwänden der Form 16 sind Haltetaschen 20 vorgesehen, deren Zweck ebenfalls noch erläutert werden wird.

An der Unterseite der Kopfplatte 12 sind zwei Tragarme 21 befestigt, zwischen denen eine obere konkave Form 22 angeordnet ist, die die erste konkave Form im Sinne der Ansprüche bildet und einen Formhohlraum 22a aufweist, welcher entsprechend der Rückseite der Innenschicht der herzustellenden Badewanne gestaltet ist.

Jeder der Tragarme 21 besitzt zwei Haltetaschen 23, in die jeweils ein Haltebolzen 24 der Form 22 eingreift, so daß letztere an der Kopfplatte 12 aufgehängt ist.

Ebenso wie die untere Form 16 ist auch die obere Form 22 mit Haltetaschen 20 und Passlöchern 18 versehen.

Das Gestell der erfindungsgemässen Einrichtung besitzt vier Gewindespindeln 30, die in der Grundplatte 10 und der Kopfplatte 12 drehbar gelagert sind und die letztere durchgreifen; an den oberen Enden der Gewindespindeln 30 ist jeweils ein Antriebskettenrad 32 befestigt, und über die vier Kettenräder 32 verläuft eine Antriebskette 34, die durch einen auf der Kopfplatte 12 montierten Elektromotor 36, auf dessen Welle ein Kettenrad 38 sitzt, angetrieben wird. Auf diese Weise lassen sich alle vier Gewindespindeln 30 gleichsinnig und synchron antreiben. Sie dienen dem Anheben und Absenken einer konvexen Form 40, die entsprechend der Gebrauchsseite der herzustellenden Badewanne gestaltet ist.

Auf jeweils zwei einander benachbarten Führungssäulen 14 ist ein Schlitten 42 verschiebbar gehalten, welcher zwei Gewindebohrungen besitzt, in denen die beiden in diesem Bereich liegenden Gewindespindeln 30 laufen, so dass bei angetriebenen Gewindespindeln der Schlitten angehoben oder abgesenkt wird. Er trägt ein Lagergehäuse 44, in welches ein Winkelgetriebe integriert und in dem ein Schwenkzapfen 46 eines Tragarms 48 drehbar gelagert ist, u.z. um eine horizontal verlaufende Schwenkachse 50. An das Lagergehäuse 44 ist schliesslich ein Schwenkmotor 52 angeflanscht, durch den sich der Tragarm 48 um die Achse 50 schwenken lässt.

Die von den beiden Schlitten 42 gehaltenen Tragarme 48 sind an den Schmalseiten einer Tragplatte 54 befestigt. Diese dient wiederum dem Zweck, die konvexe Form 40 zu halten. Hierfür sind an einer Grundplatte 40a der Form 40 vier Stehbolzen 40b befestigt, welche Führungsbohrungen 56 der Tragplatte 54 mit Spiel durchgreifen und an ihren freien Enden mit Köpfen 40c versehen sind, die den grössten Abstand der Grundplatte 40a von der Tragplatte 54 festlegen. Zwischen diesen beiden Platten 40a, 54 befinden sich eine Reihe von Druckkörpern 58, die von geschlossenen, flexiblen Schläuchen gebildet werden und deren Inneres sich mit einem Druckmittel, vorzugsweise mit einem kompressiblen Druckmittel wie Pressluft, beaufschlagen lässt.

An den beiden Längsseiten der Tragplatte 54 sind mehrere Paare von Lageraugen 60 angebracht, zwischen denen Halteklammern 62 schwenkbar gelagert sind. Zu diesem Zweck ist in den Lageraugen einer jeden Längsseite der Tragplatte 54 eine Welle 64 drehbar gelagert, an der die Halteklammern 62 befestigt sind. Diese besitzen abgewinkelte freie Enden zum Eingreifen in die Haltetaschen 20 der unteren Form 16 oder der oberen Form 22, und in diesen freien Enden der Halteklammern 62 befinden sich nicht näher dargestellte Gewindebohrungen zum Halten jeweils einer Stellschraube 66, die so bemessen ist, daß sie sich mit Spiel in ihrer Längsrichtung in eine der Haltetaschen 20 einführen lässt, d.h. die Länge der Stellschraube ist kleiner als die Höhe der Haltetaschen; auf diese Weise lässt sich der maximale Abstand einer von der Tragplatte 54 über die Halteklammern 62 gehaltenen Form 16, 20 von der Tragplatte justieren.

An der gemäß Figur 1 unteren Seite der Grundplatte 40a der konvexen Form 40 sind kurze Passstifte 68 befestigt, die ein abgerundetes freies Ende haben und in Figur 1 der Übersichtlichkeit halber weggelassen worden sind; diese Passstifte 68 sollen in die Passlöcher 18 der unteren Form 16 bzw. der oberen Form 22 eingreifen und so die jeweils zusammenwirkenden Formen passgenau (im Sinne der nachfolgenden Ausführungen) relativ zueinander halten.

Schliesslich sind in jeder der konkaven Formen 16, 22 Einfüll- und Entlüftungskanäle 70 und 72 vorgesehen, die an mit Ventilen 73a versehene Befüll- und Entlüftungsleitungen 73b bzw. 73c anschliessbar sind. Ausserdem sind an die Formen 16, 22 und 40 Energiezufuhrleitungen 74 angeschlossen, mit deren Hilfe sowie Kanälen 76 in den Formen sich diese beheizen bzw. kühlen lassen.

Eine Computersteuerung zur Steuerung des Fertigungsablaufs wurde als Ganzes mit 80 bezeichnet.

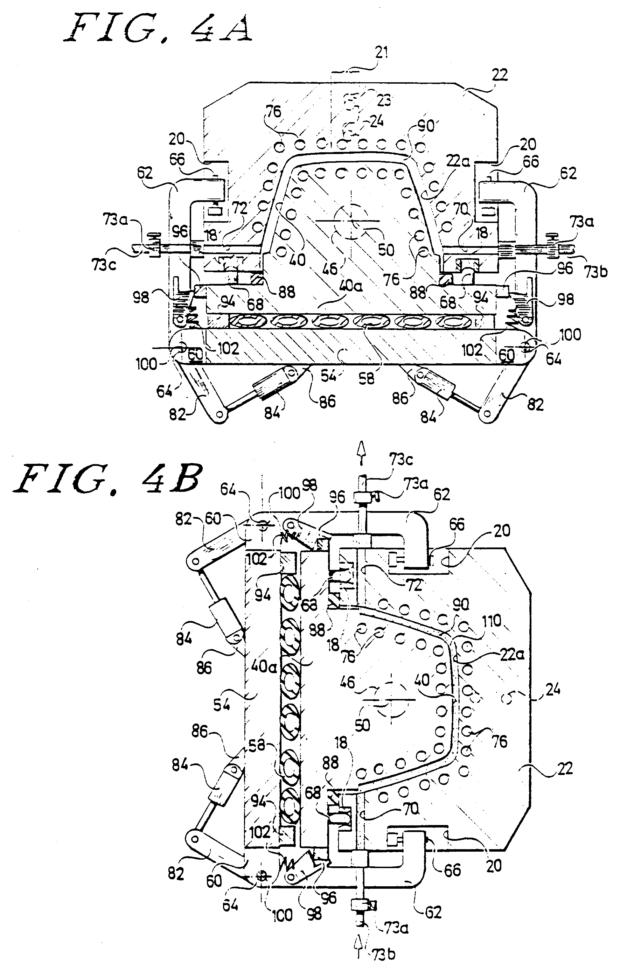

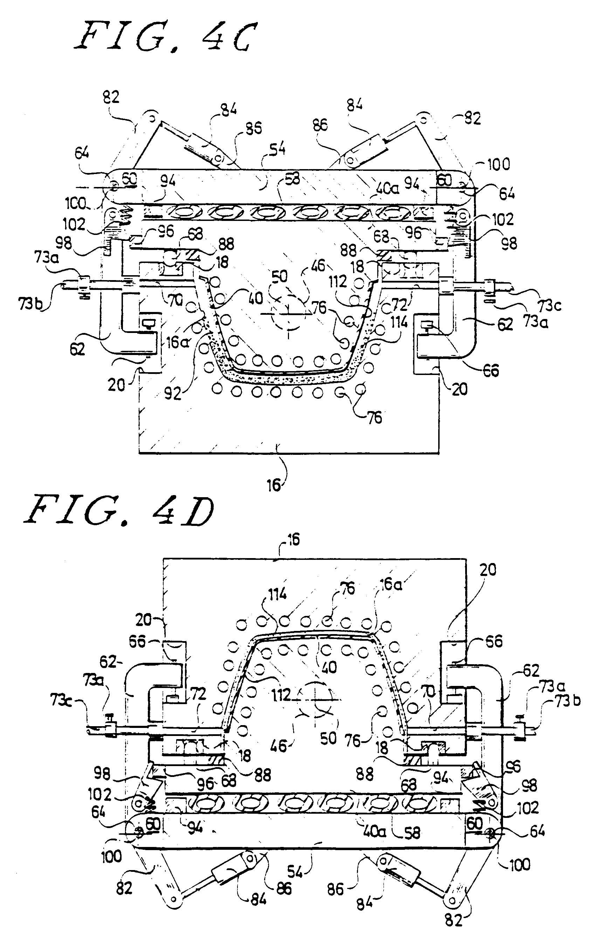

Anhand der Figur 4A, die zeigt, wie die konvexe Form 40 nach einer Drehung um 180° um die Schwenkachse 50 mit der oberen konkaven Form 22 zusammenwirkt, sollen weitere Details der verschiedenen Formen beschrieben werden, wobei davon ausgegangen wird, daß die beiden konkaven Formen 16 und 22 mit Ausnahme der Gestalt des Formhohlraums 16a bzw. 22a im wesentlichen identisch ausgebildet sind, was jedoch nicht der Fall sein muss.

An den die Halteklammern 62 tragenden Wellen 64 ist jeweils ein Betätigungsarm 82 befestigt, der sich mit Hilfe eines Druckmittelzylinders 84 verschwenken lässt. Diese Druckmittelzylinder sind einerseits an den freien Enden der Betätigungsarme 82 und andererseits an an der Tragplatte 54 befestigten Lageraugen 86 angelenkt und gestatten es daher, die Halteklammern 62 aus der in Figur 4A gezeigten Arbeitsstellung nach aussen in eine unwirksame Stellung zu schwenken.

Am Übergang von Grundplatte 40a und konvexem Bereich der Form 40 ist eine um diesen konvexen Bereich herumlaufende, in sich geschlossene Dichtung 88 angebracht, gegen die sich ein gleichfalls ringförmiger Bereich der oberen bzw. der unteren konkaven Form 22 bzw. 16, welcher an den freien Rand des Formhohlraums 22a bzw. 16a angrenzt, anpressen lässt, um so einen von der Form 40 mit der Form 22 bzw. 16 gebildeten Formhohlraum 90 bzw. 92 abzudichten. Bei drucklosen Druckkörpern 58 und nach oben geschwenkter konvexer Form 40 liegt diese auf Distanzleisten 94 auf, die zwischen der Tragplatte 54 und der Form 40 angeordnet sind und die Druckkörper 58 vor einer Beschädigung durch die Form 40 schützen sollen.

Erfindungsgemäss werden Mittel vorgesehen, die während des Füllens des Formhohlraums einen Mindestabstand der konvexen Form 40 von der Tragplatte 54 festlegen. Diese Aufgabe könnten die Distanzleisten 94 erfüllen, wenn man den Druck in den Druckkörpern 58 entsprechend reduziert oder die letzteren drucklos macht, so daß die Form 40 unter ihrem Eigengewicht oder unter der Wirkung nicht dargestellter, an der Form 40 und der Tragplatte 54 angreifender Rückzugfedern auf die Distanzleisten 94 zurücksinkt; vorteilhafter ist es jedoch, zur Festlegung des Mindestabstand der Form 40 von der Tragplatte 54 den in den Figuren 4A bis 4D dargestellten Mechanismus vorzusehen, welcher im wesentlichen aus an den Seiten der Grundplatte 40a befestigten Tragleisten 96 und gefederten Klinken 98 besteht, die von der Tragplatte 54 getragen werden - bei der dargestellten Ausführungsform von den an der Tragplatte 54 angelenkten Halteklammern 62 - und um Achsen 100 schwenkbar sind. Federn 102 dienen dazu, die Klinken 98 in Richtung auf die Tragleisten 96 vorzuspannen. Wesentlich an den Tragleisten 96 ist nur, daß sie Schultern bilden, unter die die Klinken 98 unter der Wirkung der Federn 102 einfallen können.

Anhand der Figuren 4A bis 4D soll nun der Ablauf der Herstellung einer erfindungsgemässen Badewanne erläutert werden:
Ausgehend von dem in Figur 1 gezeigten Zustand der erfindungsgemässen Einrichtung werden zunächst die Tragplatte 54 und die konvexe Form 40 gemeinsam um 180° um die Achse 50 geschwenkt und dann mit Hilfe der Gewindespindeln 30 angehoben, bis die konvexe Form 40 so weit in die obere konkave Form 22 eingetaucht, wie dies die Figur 4A zeigt. Die Druckkörper 58 sind dabei drucklos, so daß die Form 40 auf den Distanzleisten 94 aufliegt und die Klinken 98 die Tragleisten 96 nicht hintergreifen. Dann werden die Halteklammern 62 in die Haltetaschen 20 der oberen Form 22 eingeschwenkt, so wie dies die Figur 4A zeigt; dabei ist es wesentlich, daß die Stellschrauben 66 in vertikaler Richtung mit Spiel in den Haltetaschen 20 liegen.

Als nächstes wird ein verhältnismässig geringer Druck an die Druckkörper 58 gelegt, so daß diese die konvexe Form 40 und, über die Dichtung 88, die obere konkave Form 22 so weit anheben, bis die gemäß Figur 4A unteren Ränder der Haltetaschen 20 gegen die Stellschrauben 66 anschlagen. Durch dieses Anheben der konvexen Form 40 können die Klinken 98 unter die Tragleisten 96 schwenken. Die verschiedenen Abmessungen der in den Figuren 4A bis 4D gezeigten Teile der erfindungsgemässen Einrichtung und die Steifigkeit der Dichtung 88 sind nun erfindungsgemäss so gewählt worden, daß die konkave Form 22 (bzw. 16) durch die Dichtung 88 auch dann gegen die Stellschrauben 66 gehalten wird, wenn man den Druck in den Druckkörpern 58 wieder etwas reduziert, um die konvexe Form 40 bzw. deren Tragleisten 96 auf die Klinken 98 zurücksinken zu lassen. Man sieht hieraus, daß die Distanzmittel 66, 20, 62, 96 und 98 die maximale Breite bzw. Spaltweite des von den beiden Formen gebildeten Formhohlraums 90 bestimmen.

Sobald die Klinken 98 unter die Tragleisten 96 eingefallen sind, werden die beiden über die Halteklammern 62 miteinander verbundenen Formen 40, 22 (bei unter Druck stehenden Druckkörpern 58) mit Hilfe der Gewindespindeln 30 geringfügig angehoben, so daß sich die Haltebolzen 24 durch geringfügiges Schwenken der beiden Formen um die Schwenkachse 50 aus den Haltetaschen 23 herausbewegen lassen - der für dieses Schwenken erforderliche Zwischenraum zwischen der Kopfplatte 12 und der Form 22 muß natürlich vorhanden sein. Anschliessend lassen sich die beiden Formen 40, 22 mit Hilfe der Gewindespindeln 30 bis unter die Tragarme 21 absenken.

Nun werden die Formen 40 und 22 um die Schwenkachse 50 um 90° in die in Figur 4B gezeigte Position gedreht, in der der Entlüftungskanal 72 nach oben weist. In dieser Position wird der Formhohlraum 90 über den Einfüllkanal 70 mit dem später die Innenschicht der herzustellenden Badewanne bildenden Kunststoffmaterial 110 gefüllt, wobei das Ventil 73a der Entlüftungsleitung 73c offen ist. In dieser Lage der beiden Formen 40, 22 liegt die Mündung des Entlüftungskanals 72 in den Formhohlraum 90 an dessen höchster Stelle, so daß durch das Einpressen des Kunststoffmaterials in den Formhohlraum die Luft aus diesem vollständig verdrängt wird, sieht man einmal von eventuellen Lufteinschlüssen im Kunststoffmaterial, d.h. Luftbläschen im Kunststoffmaterial, ab. Dann werden die Ventile 73a geschlossen und die Formen 40, 22 um 90° in die in Figur 4A gezeigte Position zurückgeschwenkt. In dieser Position steigen im Kunststoffmaterial eventuell enthaltene Luftbläschen an die Wand des Formhohlraums 22a der oben liegenden konkaven Form 22. In dieser Position lässt man das Kunststoffmaterial polymerisieren, wobei die Polymerisation durch Beheizen der beiden Formen über die Kanäle 76 in Gang gesetzt werden kann. Damit die konvexe Form 40 dem beim Polymerisieren schrumpfenden Kunststoffmaterial folgen und letzteres nicht von den Wänden des Formhohlraums 90 wegschrumpfen kann, wird vor Beginn der Polymerisation der Druck in den Druckkörpern 58 erhöht. Infolge des Querspiels der Stehbolzen 40b in den Führungsbohrungen 56 der Tragplatte 54, der kurzen und an ihren Enden abgerundeten Passstifte 68 und der von ballig ausgebildeten kurzen Büchsen gebildeten Passlöcher 18 wird die konvexe Form 40 schwimmend zwischen der Tragplatte 54 und der konkaven Form 22 gehalten, so daß die konvexe Form auch einem infolge unterschiedlicher Wandstärken in verschiedenen Bereichen unterschiedlich stark schrumpfenden Reaktionsgußstück folgen kann (in diesem Zusammenhang sei auch auf die Tatsache hingewiesen, daß sich die Dichtung 88 in allen Bereichen elastisch verformen lässt).

Das polymerisierte Kunststoffmaterial 110 bildet eine in Figur 4C gezeigte Innenschale 112 der herzustellenden Badewanne, wobei im Kunststoffmaterial vorhandene Luftbläschen nicht an der späteren Gebrauchsseite der Badewanne liegen, sondern an der Rückseite der Innenschale 112, wo sie nicht stören. Die Möglichkeit, die konvexe Form 40 durch die Druckkörper 58 weiter in die Form 22 hineindrücken zu können, setzt natürlich voraus, daß dies die Dichtung 88 zulässt, so daß man diese hinreichend elastisch verformbar machen muß.

Grundsätzlich wäre es aber auch denkbar, eine Dichtung an einer anderen als der gezeichneten Stelle anzuordnen, nämlich in einem Bereich, in dem die den Formhohlraum begrenzenden Formflächen parallel oder ungefähr in Richtung der Stehbolzen 40b verlaufen, so daß die Dichtung den Formhohlraum in einer Art und Weise abdichtet, wie dies bei einem Kolbenring eines Hubkolbenmotors der Fall ist.

Nachdem die Polymerisation, Polyaddition oder Polykondensation des Kunststoffmaterials 110 eingesetzt hat, kann es unter Umständen zweckmässig sein, den Formhohlraum zu kühlen, um bei der Aushärtung entstehende Wärme abzuführen; auch hierzu können die Kanäle 76 verwendet werden.

Sobald das Kunststoffmaterial 110 ausgehärtet ist und die in Figur 4C dargestellte Innenschale 112 gebildet hat, werden die beiden Formen 40, 22 aus der in Figur 4A gezeigten Position um die Schwenkachse 50 geringfügig im Uhrzeigersinn geschwenkt und dann mit Hilfe der Gewindespindeln 30 so weit angehoben, daß sich durch Zurückschwenken in die in Figur 4A gezeigte Position die Haltebolzen 24 in die Haltetaschen 23 einschwenken lassen; dann werden die Druckkörper 58 drucklos gemacht, um die Halteklammern 62 nach aussen schwenken zu können, worauf die konvexe Form 40 mit Hilfe der Gewindespindeln 30 abgesenkt wird, wobei die Innenschale 112 auf dieser Form verbleibt. Die obere konkave Form 22 bleibt in den Tragarmen 21 hängen.

Dann wird später die Aussenschicht oder Aussenschale der herzustellenden Badewanne bildendes Kunststoffmaterial von oben in den Formhohlraum 16a der unteren konkaven Form 16 gegeben. Obwohl es sich bei diesem Kunststoffmaterial gleichfalls um eine fliessfähige Masse handelt, ist dies einfacher als dieses Kunststoffmaterial durch einen Einfüllkanal 70 in die Form einzubringen, da das Kunststoffmaterial für die Aussenschicht eine wesentlich höhere Viskosität besitzt als das Kunststoffmaterial für die Innenschicht. Anschliessend wird die konvexe Form 40, nachdem sie aus der in Figur 4A gezeigten Position um 180° um die Schwenkachse 50 in die in Figur 4C gezeigte Position geschwenkt worden ist, samt der Innenschale 112 in den Formhohlraum 16a der unteren konkaven Form 16 abgesenkt und mit Hilfe der Gewindespindeln 30 so weit nach unten gefahren, daß die Innenschale 112 das fliessfähige Kunststoffmaterial 114 den Wänden des von der unteren Form 16 und der Innenschale 112 gebildeten Formhohlraums 92 entlang nach oben drückt, wobei das Kunststoffmaterial die Luft aus dem Formhohlraum verdrängt - nachdem die Dichtung 88 zur Anlage an der unteren Form 16 gekommen ist, entweicht die Luft bei geöffnetem Ventil 73a über den Entlüftungskanal 72 der unteren Form 16 und die an den Entlüftungskanal angeschlossene Entlüftungsleitung 73c. Überschüssiges Kunststoffmaterial kann über die Kanäle 70 und 72 aus dem Formhohlraum 92 verdrängt werden, es ist aber auch möglich, über den Einfüllkanal 70 zusätzlich Kunststoffmaterial in den Formhohlraum hineinzupressen, um diesen vollständig auszufüllen. Die Druckkörper 58, die Halteklammern 62 und die Klinken 98 werden auch bei der Herstellung der Aussenschicht oder Aussenschale genauso gehandhabt wie bei der Herstellung der Innenschicht bzw. der Innenschale 112.

Nachdem der Formhohlraum 92 in der in Figur 4C gezeigten Position der beiden Formen 40, 16 gefüllt wurde, werden die über die Halteklammern 62 miteinander verbundenen Formen mit Hilfe der Gewindespindeln 30 so weit angehoben, daß man die beiden Formen um die Schwenkachse 50 um 180° in die in Figur 4D gezeigte Position drehen kann. In dieser Position können im Kunststoffmaterial 114 eventuell noch vorhandene Luftbläschen von der Grenzschicht zwischen dem Kunststoffmaterial und der Innenschale 112 wegwandern, und zwar an die oben liegende Aussen- oder Rückseite der herzustellenden Aussenschicht oder Aussenschale. Dann wird durch Beheizen der Formen 40, 16 die Aushärtung des Kunststoffmaterials 114 eingeleitet, worauf die Formen gegebenenfalls gekühlt werden. Auch hierbei bewirken die mit Druckmittel beaufschlagten Druckkörper 58, daß das Kunststoffmaterial 114 während des Aushärtens nicht von der Wand der Form 16 bzw. von der Innenschale 112 wegschrumpfen kann, so daß ein guter Verbund zwischen der Innenschale und der vom Kunststoffmaterial 114 gebildeten Aussenschicht oder Aussenschale gewährleistet ist. Nach dem Aushärten des Kunststoffmaterials 114 werden die Formen 40, 16 um 180° zurückgeschwenkt, die untere Form wird auf der Grundplatte 10 abgesetzt, die Druckkörper 58 werden drucklos gemacht und die Halteklammern 62 von der Form 16 gelöst, worauf sich die Form 40 anheben und die Badewanne der Einrichtung entnehmen lässt.

Erfindungsgemäss lässt sich die Wandstärke des herzustellenden Sanitärgegenstands auch noch auf andere Weise reproduzierbar festlegen; dies soll anhand der Herstellung der Innenschale 112 erläutert werden: Zunächst werden die beiden Formen 40, 22 so weit zusammengefahren, wie dies in der Zeichnung nicht dargestellte, zwischen den beiden Formen angeordnete Distanzstücke erlauben, worauf der Formhohlraum 90 mit dem für die Herstellung der Innenschale verwendeten Kunststoffmaterial gefüllt wird. Die Druckkörper 58 stehen dabei unter Druck und halten die beiden Formen gegen die Distanzstücke. Anschliessend wird bei geschlossener Entlüftungsleitung 73c über den Einfüllkanal 70 ein dosiertes Volumen des Kunststoffmaterials in den Formhohlraum 90 gepresst, um die Formen 40, 22 auf eine vorgegebene und durch das vorgegebene Volumen des zusätzlich eingepressten Kunststoffmaterials bestimmte Spaltbreite auseinanderzudrücken, wobei die Dichtung 88 natürlich so weit aufgehen muss, daß sie den Formhohlraum noch abdichtet. Der Einpressdruck des zusätzlich eingepressten Kunststoffmaterials überwindet dabei die von den Druckkörpern 58 erzeugten Formschliesskräfte. Erfindungsgemäss wird also nach dem Füllen des Formhohlraums bei geöffneter Entlüftungsleitung und auf Minimalabstand gehaltenen Formen die Entlüftungsleitung geschlossen, worauf gegen die Wirkung der Zuhaltekräfte die beiden Formen durch Einpressen eines zusätzlichen, abgemessenen Volumens an Kunststoffmaterial soweit auseinandergedrückt werden, dass sich die gewünschte Wandstärke ergibt.

Bei verhältnismässig einfach gestalteten Sanitärgegenständen - dies trifft gegebenenfalls auch auf eine Badewanne zu - könnte der Formhohlraum auch in einer Position, wie sie die Figuren 4A und 4D zeigen, mit Kunststoffmaterial gefüllt werden, wenn man einen Entlüftungskanal am Boden der jeweiligen konkaven Form anbringt, so daß das Verschwenken in die in Figur 4B gezeigte Position entfallen kann.

Zwischen der konvexen Form und der jeweiligen konkaven Form vorgesehene Distanzstücke haben auch den Vorteil, daß beim Zusammenfahren der beiden Formen die Dichtung, im vorliegenden Fall die Dichtung 88, nicht zerdrückt werden kann. Andererseits übernimmt diese Dichtung bei der bevorzugten Ausführungsform der erfindungsgemässen Einrichtung die Aufgabe, die jeweilige konkave Form stets gegen die Stellschrauben 66 zu halten.

Es kann sich empfehlen, die Passstifte 68 mit Hilfe einer Art Kugelgelenk an der Form 40 zu halten.

Nachzutragen ist noch, dass Ventile über die die Druckkörper 58 mit Pressluft gefüllt werden, ebensowenig dargestellt wurden wie der Aufbau der verwendeten Kunststoffmaterialien, so dass die Zeichnungen z.B. die hohlen Glaskügelchen im Kunststoffmaterial 114 nicht erkennen lassen. Ebensowenig sind Teile der Formen gezeigt, die erforderlich sind, um z.B. eine Ablauföffnung einer Badewanne gleich in das Reaktionsgußstück einzuformen.

Wie bereits erwähnt, kann bei der Herstellung der Aussenschale auch mit einem Kunststoffmaterial 114 gearbeitet werden, bei dem es sich um einen ein Treibmittel enthaltenden, aufschäumbaren Kunststoff, insbesondere Methylmetacrylat, handelt; an die Rückseite der Innenschale kann aber auch eine Aussenschale aus PU-Harz angeschäumt werden. Da dieses aus Harz und Treibmittel, ggf. noch einem Füller wie feinem Kaolin, bestehende Kunststoffmaterial relativ nieder viskos ist, kann dann beim Füllen des Formhohlraums 92 genau so vorgegangen werden wie bei der Herstellung der Innenschale 112.

Die Dichte des Schaumkunststoffs sollte zwischen ca. 300 und ca. 400 ^{g}/ₗ liegen, auf alle Fälle aber grösser sein als ca. 200 ^{g}/ₗ.

## Patentansprüche

1. Muldenförmiger Kunststoff-Sanitärgegenstand, wie Bade- oder Duschwanne, Becken oder dergleichen, welcher eine die Gebrauchsseite des Sanitärgegenstands bildende Kunststoff-Innenschicht (112) mit einer Wandstärke von mindestens 1 mm und eine unmittelbar gegen deren Rückseite angegossene und mit dieser stoffschlüssig verbundene, der Verstärkung der Innenschicht (112) dienende, als Reaktionsgußstück ausgebildete Kunststoff-Außenschicht (114) aufweist, welche wesentlich dicker als die Innenschicht (112) ist, dadurch gekennzeichnet, dap auch die Innenschicht (112) als Reaktionsgußstück ausgebildet ist.

2. Sanitärgegenstand nach Anspruch 1, dadurch gekennzeichnet, dass mindestens die Hälfte des Volumens der Aussenschicht (114) aus Hohlräume enthaltenden Füllkörpern mit einem Durchmesser von wenigstens 500 µm besteht.

3. Sanitärgegenstand nach Anspruch 2, dadurch gekennzeichnet, dass der Kunststoff der Innenschicht (112) quervernetztes Polymethylmetacrylat ist.

4. Sanitärgegenstand nach einem der mehreren der Ansprüche 1 bis 3, dadurch gekennzeichnet, dass die Innenschicht (112) Füllkörper mit einem Durchmesser von höchstens 100 µm enthält.

5. Sanitärgegenstand nach Anspruch 4, dadurch gekennzeichnet, dass die Füllkörper der Innenschicht (112) aus einem ein Polieren oder Schleifen der Innenschicht zulassenden Material bestehen.

6. Sanitärgegenstand nach Anspruch 5, dadurch gekennzeichnet, dass die Innenschicht (112) als Füllstoff Aluminium- und/oder Magnesiumhydroxid enthält.

7. Sanitärgegenstand nach einem oder mehreren der vorstehenden Ansprüche, dadurch gekennzeichnet, dass der Kunststoff der Innen- und der Aussenschicht (112 bzw. 114) derselbe und insbesondere quervernetztes PMMA ist.

8. Sanitärgegenstand nach einem oder mehreren der vorstehenden Ansprüche, dadurch gekennzeichnet, dass die Füllkörper der Aussenschicht (114) zumindest überwiegend Hohlkörper sind.

9. Sanitärgegenstand nach Anspruch 8, dadurch gekennzeichnet, dass die Hohlkörper geschlossene Hohlkörper sind.

10. Sanitärgegenstand nach Anspruch 9, dadurch gekennzeichnet, dass die Hohlkörper Mikroglaskügelchen sind.

11. Sanitärgegenstand nach einem oder mehreren der Ansprüche 1 und 3 bis 7, dadurch gekennzeichnet, dass die Aussenschicht (114) aus einem Schaumkunststoff besteht.

12. Sanitärgegenstand nach Anspruch 11, dadurch gekennzeichnet, dass der Schaumkunststoff eine Dicke von mehr als 200 ^{gr}/ₗ aufweist.

13. Sanitärgegenstand nach Anspruch 11 oder 12, dadurch gekennzeichnet, dass der Schaumkunststoff geschäumtes PMMA oder Polyurethanschaum ist.

14. Sanitärgegenstand nach einem oder mehreren der Ansprüche 11 bis 13, dadurch gekennzeichnet, dass der Schaumkunststoff feines Kaolin als Füller enthält.

15. Verfahren zur Herstellung eines muldenförmigen Kunststoff-Sanitärgegenstands nach einem der Ansprüche 1 bis 14, bei dem zunächst auf einer entsprechend der Gebrauchsseite des Sanitärgegenstands gestalteten konvexen Form mit fließfähigem Kunststoffmaterial eine Kunststoff-Innenschicht hergestellt und dann auf deren Aussenseite mittels einer entsprechend der Rückseite des Sanitärgegenstands gestalteten konkaven Form mit fließfähigem Kunststoffmaterial eine an der Innenschicht festhaftende Kunststoff-Aussenschicht erzeugt wird, dadurch gekennzeichnet, dass die Innenschicht (112) zwischen der konvexen Form (40) und einer der Gestalt der Rückseite der Innenschicht entsprechenden ersten konkaven Form (22) erzeugt wird, worauf die erste konkave Form entfernt und die Innenschicht samt der konvexen Form in eine entsprechend der Rückseite des Sanitärgegenstands gestaltete zweite konkave Form (16) eingetaucht und zwischen letzterer und der Innenschicht die Aussenschicht (114) erzeugt wird.

16. Verfahren nach Anspruch 15, dadurch gekennzeichnet, dass die konvexe Form (40) und die jeweilige konkave Form (22, 16) während des Ausfüllens des von den beiden Formen gebildeten Formhohlraums (90, 92) mit Kunststoffmaterial so angeordnet werden, dass nur eine Stelle der von der konkaven Form gebildeten Formhohlraumwand eine von tieferliegenden Stellen dieser Formhohlraumwand umschlossene Zone bildet, und dass der Formhohlraum über einen an dieser Zone in den Formhohlraum mündenden Kanal (72) entlüftet wird.

17. Verfahren nach Anspruch 15 oder 16, dadurch gekennzeichnet, dass die Formen (40, 22, 16) zum Aushärten des Kunststoffmaterials (112 bzw. 114) so angeordnet werden, dass der Muldenboden des Sanitärgegenstands nach oben weist.

18. Verfahren nach einem oder mehreren der Ansprüche 15 bis 17, dadurch gekennzeichnet, dass die beiden einen Formhohlraum (90 bzw. 92) bildenden Formen (40, 22, 16) während des Aushärtens des Kunststoffmaterials (112 bzw. 114) dessen Schrumpfung entsprechend einander genähert werden.

19. Verfahren nach einem oder mehreren der Ansprüche 15 bis 18, dadurch gekennzeichnet, dass das Kunststoffmaterial (114) für die Aussenschicht auf den Muldenboden der mit ihrer Öffnung nach oben weisenden zweiten konkaven Form (16) gegeben und dann die konvexe Form (40) samt Innenschicht (112) von oben in die zweite konkave Form eingepresst wird, so dass in dem so gebildeten Formhohlraum (92) das Kunststoffmaterial (114) für die Aussenschicht nach oben steigt.

20. Einrichtung zur Durchführung des Verfahrens nach Anspruch 15, welche eine der Gebrauchsseite des Sanitärgegenstands entsprechend gestaltete konvexe Form sowie eine entsprechend der Rückseite des Sanitärgegenstands gestaltete konkave Form und eine Formschließvorrichtung aufweist, dadurch gekennzeichnet, dass eine erste und eine zweite konkave Form (22, 16) vorgesehen sind, deren erste entsprechend der Rückseite der Innenschicht (112) und deren zweite entsprechend der Rückseite der Aussenschicht (114) gestaltet ist, und dass durch die Formschließvorrichtung (30, 36, 58) die konvexe Form (40) sowohl in die erste konkave Form (22) als auch zusammen mit der Innenschicht (112) in die zweite konkave Form (16) einfahrbar ist.

21. Einrichtung nach Anspruch 20, dadurch gekennzeichnet, dass die Formschließvorrichtung eine Schwenkvorrichtung (52, 44, 46) zum Drehen der konvexen Form (40) gemeinsam mit mindestens der zweiten konkaven Form (16) um eine horizontale Schwenkachse (50) aufweist.

22. Einrichtung nach Anspruch 21, dadurch gekennzeichnet, dass die Formschließvorrichtung eine Haltevorrichtung (20, 62) zum lösbaren Verbinden der konvexen Form (40) mit jeweils einer der konkaven Formen (16, 22) aufweist und dass die Schwenkvorrichtung mit der konvexen Form verbunden ist.

23. Einrichtung nach einem oder mehreren der Ansprüche 20 bis 22, dadurch gekennzeichnet, dass die Formschließvorrichtung einen Träger (54) aufweist, an dem die konvexe Form (40) in Formschließrichtung beweglich gehalten ist, und dass zwischen Träger und konvexer Form eine Nachstellvorrichtung (58) zum Verschieben der konvexen Form gegenüber dem Träger in Formschließrichtung vorgesehen ist.

24. Einrichtung nach Anspruch 23, dadurch gekennzeichnet, dass die Nachstellvorrichtung mindestens einen zwischen Träger (54) und konvexer Form (40) angeordneten, mit einem Fluid als Druckmittel beaufschlagten flexiblen Hohlkörper (58) aufweist.

25. Einrichtung nach Anspruch 23 oder 24, dadurch gekennzeichnet, dass die Haltevorrichtung eine einstellbare Hubbegrenzungsvorrichtung (20, 62, 66) zur Begrenzung der Verschiebung der konkaven Form (22 bzw. 16) in Richtung eines sich vergrössernden Abstands vom Träger (54) aufweist.

26. Einrichtung nach einem oder mehreren der Ansprüche 20 bis 25, dadurch gekennzeichnet, dass die Formschließvorrichtung ein Hubgestell (10, 14, 12) aufweist, an dem die konvexe Form (40) geführt sowie mittels einer Hubvorrichtung (36, 30) verschiebbar ist, und dass sich im Hubgestell die erste konkave Form (22) über und die zweite konkave Form (16) unter der konvexen Form (40) befindet.

## Claims

1. A trough-shaped plastic sanitary article, such as a bathtub or shower tub, basin or the like, comprising a plastic inner layer (112) forming the used side of the sanitary article and having a wall thickness of at least 1 mm and a plastic outer layer (114) in the form of a reaction molded part molded directly onto the rear side of said inner layer and being materially joined thereto, said outer layer serving to reinforce the inner layer (112) and being substantially thicker than the inner layer (112), characterized in that the inner layer (112) is also in the form of a reaction molded part.

2. Sanitary article as defined in claim 1, characterized in that at least half of the volume of the outer layer (114) consists of filler particles containing cavities and having a diameter of at least 500 µm.

3. Sanitary article as defined in claim 2, characterized in that the plastic of the inner layer (112) is cross-linked polymethyl methacrylate.

4. Sanitary article as defined in one or more of claims 1 to 3, characterized in that the inner layer (112) contains filler particles having a diameter of 100 µm at the most.

5. Sanitary article as defined in claim 4, characterized in that the filler particles of the inner layer (112) consist of a material permitting polishing or grinding of the inner layer.

6. Sanitary article as defined in claim 5, characterized in that the inner layer (112) contains aluminum hydroxide and/or magnesium hydroxide as filler.

7. Sanitary article as defined in one or more of the preceding claims, characterized in that the plastic of the inner and outer layers (112 and 114, respectively) is the same and, in particular, cross-linked PMMA.

8. Sanitary article as defined in one or more of the preceding claims, characterized in that the filler particles of the outer layer (114) are at least predominantly hollow particles.

9. Sanitary article as defined in claim 8, characterized in that the hollow particles are closed hollow particles.

10. Sanitary article as defined in claim 9, characterized in that the hollow particles are microglass beads.

11. Sanitary article as defined in one or more of claims 1 and 3 to 7, characterized in that the outer layer (114) consists of a foamed plastic.

12. Sanitary article as defined in claim 11, characterized in that the foamed plastic has a density of more than 200 g/l.

13. Sanitary article as defined in claim 11 or 12, characterized in that the foamed plastic is foamed PMMA or polyurethane foam.

14. Sanitary article as defined in one or more of claims 11 to 13, characterized in that the foamed plastic contains fine kaolin as filler.

15. A method for producing a trough-shaped plastic sanitary article as defined in any of claims 1 to 14, wherein a plastic inner layer is first produced with flowable plastic material on a convex mold designed in accordance with the used side of the sanitary article and a plastic outer layer adhering firmly to the inner layer is then produced with flowable plastic material on the outer side of the inner layer by means of a concave mold designed in accordance with the rear side of the sanitary article, characterized in that the inner layer (112) is produced between the convex mold (40) and a first concave mold (22) corresponding to the shape of the rear side of the inner layer, whereupon the first concave mold is removed and the inner layer together with the convex mold dipped into a second concave mold (16) designed in accordance with the rear side of the sanitary article and the outer layer (114) is produced between the second concave mold and the inner layer.

16. Method as defined in claim 15, characterized in that the convex mold (40) and the respective concave mold (22, 16) are arranged while the mold cavity (90, 92) formed by the two molds is being filled with plastic material such that only one point of the mold cavity wall formed by the concave mold forms a zone enclosed by lower lying points of this mold cavity wall, and that air is removed from the mold cavity via a channel (72) opening into the mold cavity at this zone.

17. Method as defined in claim 15 or 16, characterized in that the molds (40, 22, 16) are arranged for setting of the plastic material (112 and 114) such that the trough bottom of the sanitary article points upwards.

18. Method as defined in one or more of claims 15 to 17, characterized in that the two molds (40, 22, 16) forming a mold cavity (90 and 92) are brought closer to one another during the setting of the plastic material (112 and 114) in accordance with its shrinkage.

19. Method as defined in one or more of claims 15 to 18, characterized in that the plastic material (114) for the outer layer is introduced into the trough bottom of the second concave mold (16) with its opening pointing upwards and the convex mold (40) together with the inner layer (112) is then pressed from above into the second concave mold so that the plastic material (114) for the outer layer rises upwards in the mold cavity (92) thus formed.

20. An apparatus for performing the method as defined in claim 15, comprising a convex mold designed in accordance with the used side of the sanitary article as well as a concave mold designed in accordance with the rear side of the sanitary articles and a mold closing device, characterized in that a first and a second concave mold (22, 16) are provided, the first mold being designed in accordance with the rear side of the inner layer (112) and the second in accordance with the rear side of the outer layer (114), and that the convex mold (40) is displaceable by the mold closing device (30, 36, 58) both into the first concave mold (22) and together with the inner layer (112) into the second concave mold (16).

21. Apparatus as defined in claim 20, characterized in that the mold closing device comprises a pivoting device (52, 44, 46) for turning the convex mold (40) about a horizontal pivot axis (50) together with at least the second concave mold (16).

22. Apparatus as defined in claim 21, characterized in that the mold closing device comprises a holding device (20, 62) for releasably connecting the convex mold (40) to each one of the concave molds (16, 22) and that the pivoting device is connected to the convex mold.

23. Apparatus as defined in one or more of claims 20 to 22, characterized in that the mold closing device comprises a support (54), the convex mold (40) being held thereon for movement in the mold closing direction, and that a readjusting device (58) is provided between support and convex mold to displace the convex mold relative to the support in the mold closing direction.

24. Apparatus as defined in claim 23, characterized in that the readjusting device comprises at least one flexible hollow member (58) arranged between support (54) and convex mold (40) and acted on by a fluid as pressure medium.

25. Apparatus as defined in claim 23 or 24, characterized in that the holding device comprises an adjustable lift limiting device (20, 62, 66) for limiting the displacement of the concave mold (22 or 16) in the direction of an increasing distance from the support (54).

26. Apparatus as defined in one or more of claims 20 to 25, characterized in that the mold closing device comprises a lifting frame (10, 14, 12), the convex mold (40) being guided thereon as well as displaceable by means of a lifting device (36, 30), and that in the lifting frame the first concave mold (22) is located above and the second concave mold (16) below the convex mold (40).

## Revendications

1. Objet sanitaire en matière synthétique en forme d'auge, comme des baignoires, des cuvettes de douche, des lavabos, etc., qui présente une couche interne de matière synthétique (112) formant le côté d'utilisation de l'objet sanitaire et comportant une épaisseur de paroi d'au moins 1 mm et une couche externe en matière synthétique (114) qui est directement coulée contre le côté arrière de la couche interne et est raccordée à ce dernier par une liaison par la matière, qui sert de renforcement de la couche interne (112) et est réalisée en tant qu'élément à moulage par réaction et qui est sensiblement plus épaisse que la couche interne (112), caractérisé en ce qu'aussi la couche interne (112) est réalisée en tant qu'élément à moulage par réaction.

2. Objet sanitaire suivant la revendication 1, caractérisé en ce qu'au moins la moitié du volume de la couche externe (114) est constitué de corps de remplissage qui contiennent des cavités et qui ont un diamètre d'au moins 500 micromètres.

3. Objet sanitaire suivant la revendication 2, caractérisé en ce que la matière synthétique de la couche interne (112) est un polyméthacrylate de méthyle.

4. Objet sanitaire suivant l'une quelconque des revendications 1 à 3, caractérisé en ce que la couche interne (112) comporte des corps de remplissage d'un diamètre de maximum 100 micromètres.

5. Objet sanitaire suivant la revendication 4, caractérisé en ce que les corps de remplissage de la couche interne (112) sont constitués d'une matière permettant un polissage ou un ponçage de la couche interne.

6. Objet sanitaire suivant la revendication 5, caractérisé en ce que la couche interne (112) contient comme matière de remplissage de l'hydroxyde d'aluminium et/ou de magnésium.

7. Objet sanitaire suivant l'une quelconque des revendications précédentes, caractérisé en ce que les matières synthétiques des couches interne et externe (112 et respectivement 114) sont les mêmes et sont en particulier du polyméthacrylate de méthyle réticulé transversalement.

8. Objet sanitaire suivant l'une quelconque des revendications précédentes, caractérisé en ce que les corps de remplissage de la couche externe (114) sont, au moins de façon prépondérante, des corps creux.

9. Objet sanitaire suivant la revendication 8, caractérisé en ce que les corps creux sont des corps creux fermés.

10. Objet sanitaire suivant la revendication 9, caractérisé en ce que les corps creux sont de petites billes de verre microscopiques.

11. Objet sanitaire suivant l'une quelconque des revendications 1, et 3 à 7, caractérisé en ce que la couche externe (114) est constituée d'une matière synthétique moussée.

12. Objet sanitaire suivant la revendication 11, caractérisé en ce que la matière synthétique moussée présente une densité de plus de 200 g par litre.

13. Objet sanitaire suivant l'une ou l'autre des revendications 11 et 12, caractérisé en ce que la matière synthétique moussée est du polyméthacrylate de méthyle moussé ou de la mousse de polyuréthanne.

14. Objet sanitaire suivant l'une quelconque des revendications 11 à 13, caractérisé en ce que la matière synthétique moussée comporte comme charge du kaolin fin.

15. Procédé de fabrication d'un objet sanitaire en matière synthétique en forme d'auge, suivant l'une quelconque des revendications 1 à 14, dans lequel on fabrique d'abord sur un moule convexe façonné conformément au côté d'utilisation de l'objet sanitaire, avec une matière synthétique coulante, une couche interne de matière synthétique et on produit ensuite sur le côté externe de cette couche interne, au moyen d'un moule concave façonné conformément au côté arrière de l'objet sanitaire, avec une matière synthétique coulante, une couche externe en matière synthétique adhérant à la couche interne, caractérisé en ce que la couche interne (112) est produite entre le moule convexe (40) et un premier moule concave (22) qui correspond à la forme du côté arrière de la couche interne, le premier moule concave étant supprimé et la couche interne et le moule convexe étant plongés dans un second moule concave (16) façonné conformément au côté arrière de l'objet sanitaire, la couche externe (114) étant produite entre ce dernier moule concave et la couche interne.

16. Procédé suivant la revendication 15, caractérisé en ce que le moule convexe (40) et le moule concave respectif (22, 16) sont agencés, pendant le remplissage avec de la matière synthétique de la cavité de moule (90, 92) formée par les deux moules, de façon que seul un endroit de la paroi de cavité de moule, formée par le moule concave, forme une zone entourée d'endroits situés plus profondément de cette paroi de cavité de moule et en ce que la cavité de moule est purgée d'air dans cette zone, dans le canal (72) qui débouche dans la cavité de moule.

17. Procédé suivant l'une ou l'autre des revendications 15 et 16, caractérisé en ce que les moules (42, 22, 16) sont agencés pour le durcissement de la matière synthétique (112 ou 114) de façon que le fond d'auge de l'objet sanitaire pointe vers le haut.

18. Procédé suivant l'une ou plusieurs des revendications 15 à 17, caractérisé en ce que les deux moules (40, 22, 16) qui forment une cavité de moule (90 ou 92) sont rapprochés l'un de l'autre pendant le durcissement de la matière synthétique (112 ou 114), conformément au retrait de celle-ci.

19. Procédé suivant l'une ou plusieurs des revendications 15 à 18, caractérisé en ce que la matière synthétique (114) de la couche externe est versée sur le fond d'auge du second moule concave (16) qui pointe avec son ouverture vers le haut et en ce qu'ensuite le moule convexe (40) et la couche interne (112) sont pressés depuis le haut dans le second moule concave de sorte que la matière synthétique (114) de la couche externe monte vers le haut dans la cavité de moule (92) formée ainsi.

20. Dispositif pour la mise en oeuvre du procédé suivant la revendication 15, présentant un moule convexe façonné conformément au côté d'utilisation de l'objet sanitaire, un moule concave façonné conformément au côté arrière de l'objet sanitaire et un dispositif de fermeture de moule, caractérisé en ce qu'il est prévu un premier et un second moule concave (22, 16) dont le premier est façonné conformément au côté arrière de la couche interne (112) et dont le second est façonné conformément au côté arrière de la couche externe (114) et en ce que par l'intermédiaire du dispositif de fermeture de moule (30, 36, 58) le moule convexe (40) peut être introduit tant dans le premier moule concave (22) qu'aussi, avec la couche interne (112), dans le second moule concave (16).

21. Dispositif suivant la revendication 20, caractérisé en ce que le dispositif de fermeture de moule présente un dispositif de pivotement (52, 44, 46) pour la rotation du moule convexe (40), en commun avec au moins le second moule concave (16), autour d'un axe de pivotement horizontal (50).

22. Dispositif suivant la revendication 21, caractérisé en ce que le dispositif de fermeture de moule présente un dispositif de blocage (20, 62) pour la liaison détachable du moule convexe (40) avec chaque fois un des moules concaves (16, 22) et en ce que le dispositif de pivotement est relié au moule convexe.

23. Dispositif suivant l'une ou plusieurs des revendications 20 à 22, caractérisé en ce que le dispositif de fermeture de moule présente un support (54) sur lequel est maintenu, de façon mobile dans le sens de la fermeture du moule, le moule convexe (40) et en ce qu'entre support et moule convexe est prévu un dispositif de réglage (58) pour le déplacement, dans le sens de fermeture du moule du moule, convexe par rapport au support.

24. Dispositif suivant la revendication 23, caractérisé en ce que le dispositif de réglage présente au moins un corps creux (58) flexible agencé entre support (54) et moule convexe (40) et alimenté par un fluide en tant que milieu sous pression.

25. Dispositif suivant l'une ou l'autre des revendications 23 et 24, caractérisé en ce que le dispositif de blocage présente un dispositif réglable de délimitation de course (20, 62, 66) pour la délimitation du déplacement du moule concave (22 ou 16) dans le sens d'une distance qui s'agrandit à partir du support (54).

26. Dispositif suivant l'une ou plusieurs des revendications 20 à 25, caractérisé en ce que le dispositif de fermeture de moule présente une structure de levée (10, 14, 12) sur laquelle le moule convexe (40) est guidé et peut être déplacé au moyen d'un dispositif à course (36, 30) et en ce que dans la structure de levée il y a le premier moule concave (22) au-dessus du moule convexe (40) et le second moule concave (16) en dessous du moule convexe (40).
